# FASCICULE DE BREVET EUROPEEN

(11) **EP 3 216 189 B1**
(45) Date de publication et mention de la délivrance du brevet: **02.12.2020**
(21) Numéro de dépôt: 15798518.5
(22) Date de dépôt: 28.10.2015
(51) Int. Cl.: H04L 29/06, H04L 29/08

(54) **DÉLÉGATION D'INTERMÉDIATION SUR UN ÉCHANGE DE DONNÉES CHIFFRÉES**
DELEGIERUNG DER VERMITTLUNG BEI EINEM AUSTAUSCH VERSCHLÜSSELTER DATEN
DELEGATION OF INTERMEDIATION ON AN ENCRYPTED DATA EXCHANGE

(30) Priorité: 07.11.2014 FR 1460827
(43) Date de publication de la demande: 13.09.2017
(73) Titulaire: ORANGE, 75015 Paris (FR)
(72) Inventeur: STEPHAN, Emile, F-22560 Pleumeur Bodou (FR); OMNES, Nathalie, F-22560 Trébeurden (FR)
(74) Mandataire: Vidon Brevets & Stratégie
(86) Numéro de dépôt international: PCT/FR2015/052910
(87) Numéro de publication internationale: WO 2016/071607

(56) Documents cités:
- EP-A1- 2 647 169
- US-A1- 2009 193 126
- US-A1- 2013 339 472
- US-A1- 2014 250 164
- US-A1- 2014 310 429

## Description

### 1. Domaine

La présente technique se rapporte à la sécurisation des communications, et plus particulièrement à une méthode permettant d'assurer une confidentialité des données échangées entre un dispositif client et un dispositif serveur, typiquement transmises sur un réseau maillé de type Internet. Dans de tels réseaux, un certain nombre d'acteurs interviennent. Ainsi, un fournisseur d'accès est une entité offrant des moyens d'accès à son réseau pour des utilisateurs. Un utilisateur est un client du fournisseur d'accès. Cet utilisateur peut souhaiter utiliser le réseau du fournisseur d'accès pour accéder à un ou plusieurs services ou contenus. De tels services ou contenus sont alors délivrés par un fournisseur de services ou un fournisseur de contenus (typiquement sous la forme d'une relation client-serveur) au travers du réseau du fournisseur d'accès.

### 2. Art Antérieur

Les récentes révélations se rapportant à la collecte massive et à l'exploitation de données à caractères privées par des agences gouvernementales et de grandes entreprises ont remis au gout du jour un besoin de protection des informations personnelles.

Pour retrouver la confiance des utilisateurs, l'IETF (de l'anglais pour « Internet Engineering Task Force ») et les fournisseurs de contenus et de services souhaitent généraliser le chiffrement du trafic de l'Internet. Un tel chiffrement peut s'appliquer à l'ensemble des services transportés, que ce soit sur le protocole TCP (de l'anglais pour « Transmission Control Protocol ») avec TLS (de l'anglais « Transport Layer Security »), ou sur le protocole UDP (de l'anglais pour « User Datagram Protocol ») avec DTLS (de l'anglais pour « Datagram Transport Layer Security ») notamment dans WebRTC (de l'anglais pour « Web Real-Time Communication »). Un tel chiffrement peut s'appliquer aussi au trafic Web avec un usage systématique de HTTPS (de l'anglais « HyperText Transfer Protocol Secure ») par les fournisseurs de contenus et de services (tels que Google®, Facebook®, Twitter® et Amazon®).

Ainsi, le chiffrement du trafic par l'intermédiaire des protocoles HTTPS, TLS ou DTLS se généralise. On estime ainsi que près de la moitié du trafic est déjà chiffré.

Du point de vue de l'utilisateur, un tel chiffrement présente a priori des avantages. Cela permet en effet de garantir une certaine confidentialité des données transmises et de restaurer une confiance perdue vis-à-vis des fournisseurs de services.

En revanche, un tel chiffrement remet en cause un certain nombre de principes, notamment des principes de fonctionnement des fournisseurs d'accès. Ainsi, une architecture classique à base de protocole HTTP (notamment dans sa version 1.1, cf section 2 du document RFC 7230) intègre nativement des serveurs proxy de tiers (intermédiaires) notamment pour fournir une fonction de mise en cache (voir la version 14 du draft « draft-ietf-httpbis-http2 »). Une telle fonction est par exemple utile pour accélérer le chargement de contenus qui sont souvent accédés par les utilisateurs. L'utilisation des protocoles TLS, DTLS ou HTTPS protège intrinsèquement la connexion de l'intrusion d'un tiers et ne permet donc pas une mise en cache d'un contenu par un tiers, notamment par le proxy du fournisseur d'accès. Il en résulte une dégradation de performance pour l'utilisateur et une augmentation de la charge des liens internationaux.

En outre, ces serveurs proxy sont également utiles pour effectuer d'autres actions comme l'analyse des paquets, la mesure d'audience d'un contenu, la réalisation de mesures nécessaires à la facturation ou l'authentification du client, autant d'actions compromises par l'utilisation de protocoles TLS, DTLS ou HTTPS. Plusieurs exemples de serveurs proxy sont connus de US 2009/193126, US 2014/310429, EP2647169 et US 2014/250164. En particulier, ces serveurs proxy sont utilisés pour enrichir le contenu. Cela passe soit par un enrichissement de requêtes en provenance du client, soit par un enrichissement des réponses en provenance du serveur. De la même manière que pour la mise en cache, le chiffrement du transport (par TLS, DTLS, HTTPS, voire extension TCP) ne permet pas au proxy du fournisseur d'accès de modifier le contenu de ces requêtes ou de ces réponses, puisque l'information est chiffrée et donc inaccessible au proxy. À nouveau, il en résulte une dégradation de performance pour l'utilisateur : ces ajouts d'informations sont en effet bien utiles, tant du côté client que du côté du serveur (du fournisseur de contenu ou du fournisseur de services) par exemple pour authentifier l'utilisateur, adapter le contenu transmis, le type de service disponible, etc. Par exemple, un tel enrichissement permet d'adapter le format d'un contenu en fonction de la bande passante disponible.

Ces problèmes sont augmentés par l'utilisation d'une nouvelle version du protocole HTTP. En effet, une version 2 du protocole HTTP (autrement désignée par HTTP2) commence à être actuellement mise en œuvre par les fournisseurs de contenus ou les fournisseurs de services. À l'aide de cette nouvelle version du protocole HTTP, les fournisseurs de contenus ou les fournisseurs de services déploient leurs propres proxys HTTP2 auxquels les terminaux se connectent en utilisant le protocole TLS.

Avec l'utilisation du protocole HTTP2, les connexions vers des domaines différents sont multiplexées dans une seule connexion TCP chiffrée avec TLS. Il n'est donc plus possible de différencier les services (ni pour des fonctions de comptage, ni pour du contrôle de flux nécessaire à la fourniture de qualité de services adaptées par service) ni d'insérer des éléments d'information de signalisation dans le flux (nécessaires pour communiquer des métadonnées ou nécessaires au réseau). En outre, il n'est plus possible non plus de fournir ces informations à d'autres partenaires. Le protocole HTTP2 impacte ainsi notamment les proxys des opérateurs, notamment ceux basés sur l'interception des données et en charge de la réalisation de l'inspection profonde de paquet (de type DPI pour « Deep Packet Inspection ») mais aussi ceux fonctionnant à l'aide du protocole HTTP1.1 dès lors que les fournisseurs de contenus ou de services déploient leurs propres proxy utilisant le chiffrement entre le client et le serveur, par exemple avec le protocole TLS.

Il existe donc un besoin de fournir une solution qui puisse tout à la fois assurer une confidentialité des données transmises entre le fournisseur de services et l'utilisateur tout en permettant au fournisseur d'accès de réaliser les opérations nécessaires au bon fonctionnement de son réseau.

### 3. Résumé

La technique proposée résout au moins en partie les problèmes posés par la généralisation du chiffrement de données. En effet, la technique proposée se rapporte à un procédé de traitement de données, mis en œuvre au sein d'un module intermédiaire entre un module client et un module serveur connectés au travers d'un réseau de communication. Selon cette technique, un tel procédé comprend :
- une étape de réception, en provenance d'un des modules client et serveur, d'une requête d'intermédiation identifiant une opération d'intermédiation à effectuer relativement à un flux de données chiffrées échangées entre le module client et le module serveur;
- une étape de traitement relatif auxdites données chiffrées en fonction de ladite opération d'intermédiation.

Ainsi, d'un point de vue opérationnel, la technique proposée permet une intermédiation sur des données échangées de manière sécurisée dans une relation client-serveur, tout en garantissant que l'intermédiaire ne puisse avoir accès au contenu de ces données, le tout sous le contrôle du fournisseur de service gérant l'architecture client-serveur composée du module client et du module serveur (typiquement un acteur dit « OTT » ou « Over-The-Top »). Ceci permet une gestion collaborative de ces flux de données échangées de nature à satisfaire aussi bien le fournisseur de l'architecture client-serveur que l'opérateur gérant le réseau de communication utilisé par cette architecture. En outre, cette technique a un impact limité sur les équipements utilisés dans l'architecture client-serveur. En effet les modifications à réaliser tant sur le module client que sur le module serveur (fournissant du contenu ou un service) sont mineures, la principale modification consiste à changer l'objet du chiffrement, qui n'est plus la connexion client-serveur dans son ensemble, mais peut se faire par flux ou par objet.

Selon une caractéristique particulière, la requête d'intermédiation est implémentée sous la forme d'une trame de données dudit flux présentant une première partie où sont transportées les données chiffrées et une deuxième partie, lisible par le module intermédiaire, dans laquelle est inséré un champ identifiant l'opération d'intermédiation à effectuer. Ainsi, les instructions de délégation peuvent être transportées au sein même de trames disponibles pour transporter le contenu à caractère confidentiel, ce qui permet l'implémentation de la technique de délégation sans modifier substantiellement les équipements existants, ni les normes de communication existantes.

Selon une caractéristique particulière, le procédé comprend, préalablement à la réception de la requête d'intermédiation, une étape de réception d'un message identifiant la trame de données du flux dans laquelle est inséré le champ identifiant l'opération d'intermédiation à effectuer. Ainsi, le module intermédiaire est averti simplement de la présence d'instructions de délégation dans le flux de données chiffrées.

Selon une caractéristique particulière, le procédé est mis en œuvre à l'aide d'un protocole de transmission de données définissant, outre le flux de données au sein duquel sont transmises les données chiffrées, un flux de contrôle, lisible par le module intermédiaire, au sein duquel est transmis le message. On réutilise ainsi les caractéristiques inhérentes d'un tel protocole de transmission pour avertir le module d'intermédiaire de la « perméabilité » d'un flux de données chiffrées, i.e. du fait que ce flux transporte, outre des données chiffrées, des instruction de délégation destinées au module intermédiaire. Selon une caractéristique particulière, ce protocole de transmission est le protocole HTTP en version 2, ce qui permet d'utiliser les propriétés de ce protocole particulier, de plus en plus employé par les fournisseurs de services ou de contenus, pour l'implémentation de la technique proposée.

Selon une caractéristique particulière, la réception de la requête d'intermédiation fait suite à l'envoi, au module client ou au module serveur par le module intermédiaire, d'un message requérant une délégation d'intermédiation. Ainsi, la délégation d'intermédiation peut être à l'initiative de l'intermédiaire (typiquement l'opérateur gérant le réseau de communication où se situe le module intermédiaire), tout en restant sous le contrôle du fournisseur de service gérant l'architecture client-serveur.

Selon une caractéristique particulière, l'opération d'intermédiation à effectuer est un enrichissement du flux de données, le procédé comprend en outre une étape d'obtention d'au moins une donnée d'intermédiation et en ce que l'étape de traitement comprenant la transmission à un des modules client ou serveur MS de ladite donnée d'intermédiation dans le flux de données chiffrées. Cela permet à l'opérateur de fournir au fournisseur de service des renseignements supplémentaires quant au flux de données chiffrées qu'il ne serait pas en mesure de fournir avec une connexion entièrement chiffrée.

Selon une caractéristique particulière, l'opération d'intermédiation à effectuer est le stockage d'un contenu associé aux données chiffrées, et l'étape de traitement comprend la mémorisation d'un contenu identifié par ladite requête d'intermédiation. Cela permet à l'opérateur de proposer au fournisseur de service un service de mise en cache de certains contenus qu'il propose, par exemple ceux ayant le plus d'audience, pour accélérer leur distribution et donc la qualité d'expérience utilisateur, ce qu'il ne serait pas en mesure de proposer avec une connexion entièrement chiffrée.

Selon une caractéristique particulière, l'opération d'intermédiation à effectuer est la lecture de données transmises dans le flux de données chiffrées, et l'étape de traitement comprend l'extraction par le module intermédiaire de données lisibles accompagnant les données chiffrées au sein d'une trame du flux transportant les données chiffrées et la transmission desdites données lisibles à un équipement du réseau les utilisant dans un traitement propre au réseau. Cela permet à l'opérateur d'exploiter les données chiffrées pour ses propres besoins, par exemple pour faire des mesures d'audience ou des calculs de facturation, ce qu'il serait difficilement en mesure d'effectuer avec une connexion entièrement chiffrée.

Selon une caractéristique particulière, l'opération d'intermédiation à effectuer est la modification de données transmises dans le flux de données chiffrées, et l'étape de traitement comprend la modification par le module intermédiaire de données lisibles accompagnant les données chiffrées au sein d'une trame du flux transportant les données chiffrées. Cela permet notamment à l'opérateur de compléter, en collaboration avec le fournisseur de service, le contenu sécurisé échangé au moyen de l'architecture client-serveur, par exemple pour des opérations de contrôle de flux, ce qu'il serait impossible d'effectuer avec une connexion entièrement chiffrée.

Selon un autre aspect, la technique proposée se rapporte également à un module intermédiaire de traitement de données, apte à être utilisé entre un module client et un module serveur connectés au travers d'un réseau de communication. Un tel module comprend :
- des moyens de réception, en provenance d'un des modules client et serveur d'une requête d'intermédiation identifiant une opération d'intermédiation à effectuer relativement à un flux de données chiffrées échangées entre le module client et le module serveur;
- des moyens de traitement associé audit flux de données chiffrées en fonction de ladite opération d'intermédiation.

Selon un autre aspect, la technique proposée se rapporte également à un module, dit module source, comprenant des moyens de communication à un réseau de communication, pour la transmission de données chiffrées à destination d'un autre module, dit module destinataire, via un module intermédiaire situé dans le réseau de communication. Un tel module comprend en outre des moyens de traitement aptes à générer une requête d'intermédiation identifiant une opération d'intermédiation à effectuer relativement à un flux de données chiffrées échangées avec ledit module destinataire, les moyens de communications étant configurés pour transmettre ladite requête d'intermédiation au module intermédiaire.

Selon une caractéristique particulière, les moyens de traitement sont aptes en outre à générer un message d'un message identifiant une trame de données du flux dans laquelle est inséré un champ identifiant l'opération d'intermédiation à effectuer, les moyens de communications étant configurés en outre pour transmettre ledit message au module intermédiaire .

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique (clé USB, SSD), ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (capteur, terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc. Chaque composante du système précédemment décrit met bien entendu en œuvre ses propres modules logiciels.

Les différents modes de réalisation mentionnés ci-dessus sont combinables entre eux pour la mise en œuvre de l'invention. L'invention est définit par les caractéristiques des revendications ci-jointes.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente le principe général d'un procédé selon la présente invention ;
- la figure 2 expose schématiquement l'architecture matérielle d'un module intermédiaire selon un mode de réalisation de l'invention;
- la figure 3 expose schématiquement l'architecture matérielle d'un module client selon un mode de réalisation de l'invention;
- la figure 4 expose de manière simple l'architecture matérielle d'un module serveur selon un mode de réalisation de l'invention.

### 5. Description

### 5.1. Principe général de l'invention

Comme exposé préalablement, le principe général de l'invention consiste à permettre à la fois que, du point de vue du module client et du module serveur, le contenu échangé (flux de données ou objet) reste chiffré tandis que, du point de vue d'un module intermédiaire entre ces dispositifs client et serveur, des données d'intermédiation (qui sont par exemple des données nécessaires au maintien en condition opérationnelle du réseau de communication ou des données nécessaires à la mise en œuvre de certains services) soient accessibles et puissent être utilisées vis-à-vis du contenu chiffré. Ces données d'intermédiation, en d'autres termes, sont les données qui permettent au module intermédiaire de remplir ses fonctions d'intermédiation, qui peuvent être des fonctions de modification de contenu, de cache de contenu, d'insertion de données complémentaires, etc.

Pour atteindre ce résultat, le chiffrement n'est pas réalisé directement en chiffrant l'intégralité de la connexion entre le module client et le module serveur du fournisseur de service, comme cela peut être le cas avec le protocole https. Selon la présente invention, le chiffrement peut être réalisé au niveau d'un flux de données et/ou d'un objet, de manière indépendante. Selon la présente invention, au moins un flux ou un objet parmi la pluralité des flux et objets multiplexés est utilisable par le module intermédiaire (par exemple le module serveur proxy) pour permettre une intermédiation. Il peut s'agir du flux nommé flux de contrôle. Il peut s'agit d'un objet tel qu'un champ de l'en-tête. En fonction des protocoles de communication utilisés, le flux de contrôle peut être un flux indépendant des flux de données, transmis en parallèle des flux de données, ou un flux intégré au flux de données (c'est-à-dire que le flux de contrôle est « noyé » dans les flux de données), ou bien encore une combinaison des solutions précédentes.

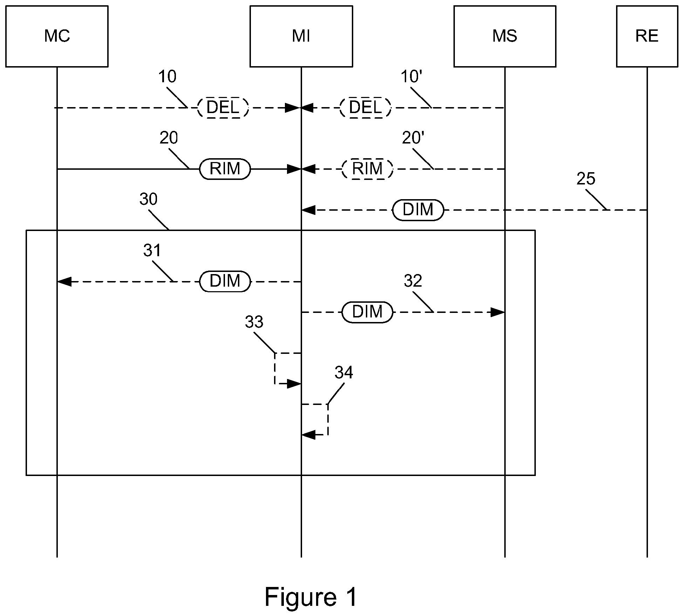

Un procédé selon le principe de la présente invention est plus particulièrement exposé en relation avec la **figure 1****.**

Ce procédé comprend, du point de vue du module intermédiaire MI (qui peut être, par exemple, un serveur dit serveur proxy) :
- la réception (étape 20) d'une requête d'intermédiation RIM identifiant une opération d'intermédiation à effectuer relativement à un flux de données chiffrées échangé entre un module client MC et un module serveur MS. Cette requête peut provenir du module client MC ou du module serveur MS, selon les cas.
- un traitement (étape 30) associé à ce flux de données chiffrées, en fonction de cette opération d'intermédiation identifiée dans la requête d'intermédiation RIM.

Ainsi, contrairement à l'art antérieur dans lequel on réalise un chiffrement de l'intégralité de la connexion entre le module client MC et le module serveur MS au niveau par exemple de la couche TLS, la solution proposée consiste à chiffrer tout ou partie des données échangées entre le module client et le module serveur, tout en permettant au module intermédiaire de recevoir une requête lui permettant d'intervenir par rapport à ces données chiffrées, sans nécessairement avoir besoin de connaître leur contenu.

On entend ici par « données chiffrées », de simples données individuelles ou des objets (par exemple des images ou des fichiers) qui ont été totalement ou partiellement chiffrées par l'un des modules client MC ou serveur MS, dit émetteur, et peuvent être déchiffrées par l'autre de ces modules, dit destinataire, par exemple au moyen de clés de chiffrement et de déchiffrement disponibles sur les deux dispositifs. Dans ce cas, le module intermédiaire n'est pas capable de déchiffrer ces données s'il ne dispose pas d'une telle clé de déchiffrement. La technique « Javascript Object Signing and Encryption », ou JOSE, peut ainsi être employée.

On entend ici par « opération d'intermédiation » une action d'intermédiation en rapport avec les données chiffrées, émises dans un flux plus ou moins partiellement chiffré, dont la mise en œuvre est déléguée par le module émetteur MC ou MS au module intermédiaire MI. On parle aussi de « délégation d'intermédiation ».

Cette action d'intermédiation est associée à un ou plusieurs traitements de données spécifiques que le module destinataire MI doit effectuer en rapport avec ces données chiffrées. Dans certains cas, le traitement correspond précisément à l'opération d'intermédiation à effectuer (par exemple quand celle-ci est une simple lecture de données lisibles accompagnant les données chiffrées), dans d'autre cas le traitement comporte une ou plusieurs étapes successives permettant d'implémenter l'opération d'intermédiation associée (par exemple quand celle-ci est un enrichissement, le fait d'obtenir les données d'intermédiation servant à cet enrichissement, puis de les transmettre à un des modules MC ou MS, comme il sera vu dans un exemple plus loin).

La requête d'intermédiation RIM peut notamment être implémentée sous la forme d'une trame de données du flux échangée entre les dispositifs MC et MS, dans laquelle est inséré un champ (dit champ de délégation d'intermédiation) identifiant l'opération d'intermédiation à effectuer. Pour identifier cette opération, le champ peut comprendre un identifiant de l'action d'intermédiation ('enrichir', 'lire', 'stocker', etc.) ainsi que des paramètres utiles pour cette action (sens de l'action, valeurs spécifiques auxquelles appliquer l'action, etc.). Une telle trame de données peut ainsi comprendre une partie chiffrée (par exemple, la partie « payload » de cette trame, soit entièrement, soit partiellement) dans laquelle sont insérées les données chiffrées échangées entre les dispositifs MC et MS, et une partie non-chiffrée (par exemple, une partie ou l'ensemble de l'entête de cette trame, voire une partie de la partie « payload » de celle-ci) dans laquelle est inséré ce champ identifiant l'opération d'intermédiation, lequel peut alors être extrait par le module intermédiaire MI afin que ce dernier détermine l'opération d'intermédiation à effectuer.

Afin de permettre la réception d'une telle requête d'intermédiation RIM sous forme d'une trame de données du flux dans laquelle est inséré un tel champ d'intermédiation, la réception préalable (étape 10) d'un message DEL par le module intermédiaire MI peut avantageusement avoir lieu. Ce message DEL est avantageusement émis par le même module que celui émettant la requête d'intermédiation RIM et sert à prévenir le module intermédiaire MI qu'il va recevoir des instructions de délégation concernant une opération à effectuer dans une trame de données du flux chiffrées, par exemple dans une partie spécifique (tel son entête non chiffré) de la première trame de données de ce flux suivant ce message DEL. Ainsi alerté, le module intermédiaire MI peut récupérer aisément ces instructions de délégation en surveillant le flux de données chiffrées transitant par lui.

Le traitement (étape 30) associé au flux de données chiffrées en fonction de l'opération d'intermédiation peut être un des traitements suivants :
- la transmission (étape 31) d'une donnée d'intermédiation, désignée ici par DIM, au module client MC ; ceci correspond par exemple à une opération d'enrichissement, par le module intermédiaire MI, d'un flux de données transmis du module serveur MS vers le module client MC, comme l'ajout de publicités ou de liens vers des contenus suggérés ;
- la transmission (étape 32) de données d'intermédiation DIM à un module serveur MS; ceci correspond par exemple à la mise en œuvre d'une authentification par le module intermédiaire MI pour le compte du module serveur MS ou encore à une opération d'enrichissement du flux de données transmis au module serveur MS avec des données relatives à l'état du réseau de communication ;
- la mémorisation (étape 33), au sein d'une mémoire cache à laquelle le module intermédiaire MI a accès (soit parce qu'elle est intégrée dans ce dispositif MI, soit parce qu'elle est intégrée dans un équipement connecté au dispositif MI), d'un contenu identifié par la requête d'intermédiation RIM ; ceci peut par exemple être mis en œuvre soit au fur et à mesure de la transmission du contenu du module serveur MS vers le module client MC, soit par un téléchargement direct du contenu par le module intermédiaire MI auprès d'un serveur de contenus distant, soit par l'accès à une autre version de ce contenu.
- la mémorisation (34), au sein d'une mémoire cache à laquelle le dispositif MI a accès, de la requête d'intermédiation RIM, ou d'une donnée d'intermédiation contenue dans une réponse à cette requête ; ceci peut par exemple permettre de réaliser des statistiques, de respecter des contraintes légales ou d'offrir des expériences utilisateurs multi dispositifs.
   - l'extraction de données lisibles par le module intermédiaire MI au sein d'une trame du flux transportant des données chiffrées et des données lisibles (i.e. non chiffrées), ceci correspondant à une opération de lecture de données transmises dans le flux de données chiffrées, les données extraites pouvant être utilisées par le module intermédiaire MI pour la facturation de l'utilisateur du module client MI ou la mesure d'audience d'un contenu. Ces données lisibles peuvent être notamment des métadonnées associées aux données d'un contenu, ces dernières étant chiffrées.
   - la modification de données lisibles (par exemple, des métadonnées associées aux données chiffrées) par le module intermédiaire au sein d'une trame du flux transportant des données chiffrées et des données lisibles (i.e. non chiffrées), ceci correspondant à une opération de modification de données transmises dans le flux de données chiffrées, utile par exemple dans le contexte d'un contrôle de flux ou pour mettre à jour des informations, telles que des informations de contexte.

Comme vu précédemment, l'opération d'intermédiation peut être une opération d'enrichissement utilisant une donnée d'intermédiation DIM. Dans un tel cas de figure, le procédé comprend en outre l'obtention (étape 25) de cette donnée d'intermédiation DIM par le module intermédiaire MI. Cette donnée d'intermédiation DIM peut être obtenue soit directement au sein du module intermédiaire MI, dans la mesure où il possèderait déjà cette donnée d'intermédiation DIM à ce stade, soit auprès de ressources externes RE, qui peuvent être d'autres serveurs ou entités du réseau de communication auquel le dispositif d'intermédiation MI est connecté, par exemple des serveurs mémorisant des données relatives à des clients ou encore des serveurs mémorisant des données relatives à l'état du réseau de communication, telle que des données de congestion de nœuds, de bande passante disponible, etc.

Pour permettre aux modules clients et/ou serveur de déléguer une opération d'intermédiation au module intermédiaire tout en menant un échange de données chiffrées, la requête d'intermédiation RIM est transmise de manière non chiffrée, et donc interprétable par le module intermédiaire MI, contrairement au contenu échangé entre les dispositifs MS et MC. En particulier, cette requête d'intermédiation RIM peut être implémentée sous la forme d'une trame de données du flux, présentant une première partie (une partie ou l'ensemble du « payload » de la trame) où sont transportées les données chiffrées et une deuxième partie (une partie ou l'ensemble de l'entête, voire aussi une partie du « payload », de cette trame), lisible par le module intermédiaire MI, dans laquelle est inséré le champ identifiant l'opération d'intermédiation à effectuer.

Dans la mesure où une telle trame de données du flux est utilisée en tant que requête d'intermédiation RIM, le procédé comprend alors avantageusement, préalablement à la réception (étape 20) de la requête d'intermédiation RIM, une étape de réception (étape 10) d'un message DEL identifiant la trame de données du flux dans laquelle est inséré le champ identifiant l'opération d'intermédiation à effectuer.

En particulier, on peut ici utiliser un protocole de transmission de données définissant, outre le flux de données au sein duquel sont transmises les données chiffrées (et donc la requête d'intermédiation RIM), un flux de contrôle, lisible par le module intermédiaire, au sein duquel peut être transmis ce message DEL. C'est notamment le cas du protocole de transmission HTTP en version 2, qui prévoit un flux (« stream #0 ») de signalisation supportant la transmission de trames « CONTROL » non chiffrées, ainsi que la présence d'autres flux supportant la transmission de trames « DATA » pouvant contenir des données chiffrées ainsi que des données non-chiffrées.

### 5.2. Description de modes de réalisation de l'invention

Dans les modes de réalisation décrits ci-après, le protocole HTTP en version 2 est considéré pour la connexion entre le module client MC et le module serveur MS via le module intermédiaire MI. Une connexion HTTP2 comprend notamment flux de signalisation (dit « stream 0 ») et un ou plusieurs flux de données (dits « stream 1 », « stream 3 » etc.) créés au fur et à mesure de l'utilisation de cette connexion pour des échanges de données, ces flux étant multiplexés, c'est-à-dire qu'ils sont transmis et/ou reçus de concert au sein de la connexion HTTP2. Cependant, d'autres protocoles de transport tels que QUIC, SCTP, UDP, RTP, TCP, peuvent aussi être envisagés.

Dans ces modes de réalisation, la délégation d'intermédiation est mise en œuvre par l'intermédiaire d'une extension, désignée ici par 'SPOC' (pour *« Sécurité et Perméabilité des Objets et des Connexions »*)*,* au protocole HTTP2.

Au niveau du protocole HTTP2, tel qu'il est défini actuellement, les trames (« frames » en anglais) sont soit de type trame de contrôle ('CONTROL' en anglais), soit de type trames de données ('DATA' en anglais). La portée de ces trames est variable : de bout en bout ou hop-by-hop (de nœud en nœud). Le procédé proposé permet une perméabilité des objets et des connexions en insérant des instructions relatives aux délégations de manipulation (redirection, lecture, enrichissement, modification, ...) dans la connexion HTTP2.

Les instructions d'intermédiation sont transmises par le « user-agent » d'un module client ou un module serveur. Elles permettent de déterminer les délégations de manipulations et le mode opératoire de traitement des données (« lire, écrire, ajouter, rediriger, cacher... ») par le module intermédiaire. Les instructions de délégation, ainsi que les valeurs SPOC en découlant, sont transmises dans des trames de données. Cependant, afin que les différents intervenants (client, serveur, proxy) soient avertis de la présence d'instructions de délégation et de valeurs SPOC, un champ spécifique d'une trame de contrôle est utilisé, ici un bit du champ « Flags » de longueur 8 bits de l'entête commun a toute les trames HTTP2, notamment la trame de type HEADER.

### 5.2.1 Traitement de données d'intermédiation à fin d'enrichissement d'une requête de création de flux de données chiffrées.

Dans ce premier mode de réalisation, le module intermédiaire MI est un proxy intervenant pour ajouter de l'information à l'information transmise par une application client, installée sur un module client MC, à destination d'un module serveur MS. Plus particulièrement, dans ce premier mode de réalisation, le module client MC requiert que le module serveur MS lui transmette un flux multimédia.

Dans ce premier mode de réalisation, les échanges se font dans une connexion HTTP2 au moyen d'un flux de données chiffrées entre le module client MC et le module serveur MS. L'application cliente (i.e. le user agent installé sur le dispositif MC) transmet au proxy (i.e. le module intermédiaire MI) une requête d'intermédiation identifiant une opération d'intermédiation correspondant à un enrichissement de ce flux, avec des données d'intermédiation correspondant ici à un identifiant « userlD » du compte de l'utilisateur du module client MC, un identifiant « partnerlD » d'un sponsor B2B ou ces deux identifiants. Une telle requête d'intermédiation peut prendre la forme d'une trame de données du flux dans laquelle est inséré le champ « SPOC » suivant, contenant un certain nombre d'informations de délégation, notamment l'opération d'intermédiation à effectuer (« enrichir ») et le sens de

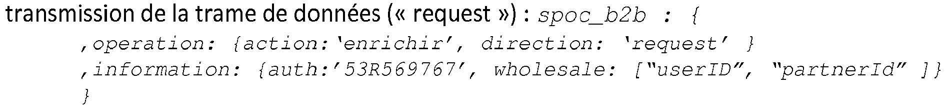

Après avoir reçu cette requête d'intermédiation et extrait le champ « SPOC » ci-avant, le proxy est informé qu'il doit enrichir le flux de données en insérant, dans la trame de données reçue, les données d'intermédiation requises (userlD et partnerID) avant de transmettre cette trame au module serveur MS. Cette insertion peut être implémentée en remplaçant dans cette trame de données le champ « SPOC » ci-avant par le champ de données d'intermédiation suivant :

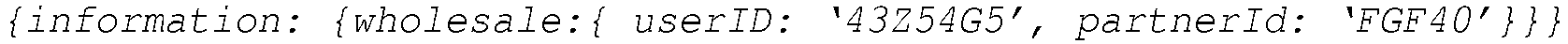

Le module serveur MS reçoit alors cette trame de données et extrait de cette trame les identifiants d'utilisateur et/ou de sponsor, qu'il peut alors utiliser pour traiter et fournir le service de streaming prévu contractuellement.

Dans ce premier mode de réalisation, le proxy est connecté à un système d'information de clientèle et obtient par ce biais des informations sur l'utilisateur telles que son identifiant UserID, par exemple à partir de l'adresse IP au module client MC.

L'envoi par le dispositif MC de la requête d'intermédiation sous forme de trame de données contenant un champ SPOC fait ici suite à l'envoi préalable par le dispositif MC d'une trame de contrôle permettant au proxy d'identifier la requête d'intermédiation, sur un flux de contrôle distinct du flux de données. L'enchainement est ici le suivant :
1) L'application installée sur le module client effectue une requête 'http1.1 GET example.com/auth' ;
2) La pile HTTP2 transmet alors une trame de contrôle HTTP2 de type « HEADERS » dans le flux 0 (i.e. un flux de contrôle) pour créer un flux de données, par exemple le flux 23 (valeur choisie arbitrairement dans cet exemple). Dans une trame de type « HEADERS », l'application cliente a inséré un flag SPOC indiquant au proxy que le flux 23 est « perméable », c'est-à-dire que la première trame de données transmise par le module client dans ce flux 23 correspond à une requête d'intermédiation indiquant une opération à effectuer.
3) Le module client transmet une première trame HTTP2 de type « DATA » dans ce flux 23, cette trame de données contenant les informations de délégation décrites ci-dessus ;
4) le proxy reçoit la trame « HEADERS » sur le flux 0 et la redirige vers le module serveur tout en déterminant ainsi que le flux 23 est perméable ;
5) Après avoir reçu dans le flux 23 la première trame de données « DATA » contenant le champ « SPOC » décrit précédemment, il remplace ce champ « SPOC » par les données d'intermédiation décrites précédemment pour enrichir ce flux 23 ;
6) Le module serveur MS reçoit la trame « HEADERS » et détecte le flag « SPOC ». Il en déduit qu'il doit attendre la première trame DATA sur le flux 23 pour y trouver des données d'intermédiation à exploiter;
7) Le module serveur MS reçoit ensuite la première trame DATA contenant le message SPOC enrichi. Il en extrait les identifiants « userlD » et « PartnerID » permettant de déterminer l'utilisateur et le contrat concerné, ce qui lui permet de fournir le service de streaming prévu par le contrat à l'application cliente installée sur le module client MC.

Similairement, le module serveur MS peut autoriser le proxy à « enrichir » les trames de données qu'il transmet dans le flux 23 en réponse à la requête émanant du module client. Dans ce cas, c'est le module serveur MS qui transmet une requête d'intermédiation au proxy, sous la forme d'une trame de type DATA, dans l'entête de laquelle est inséré un flag « SPOC » permettant au proxy d'être informé de la présence d'informations de délégation, et où est également inséré un champ de délégation « SPOC » qui n'est pas pris en compte par le contrôle d'intégrité du chiffrement, par exemple sous la forme suivante :

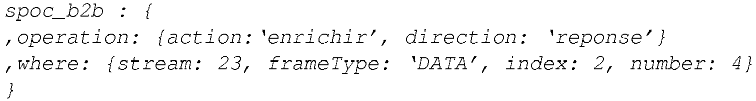

Le proxy obtient des informations à insérer (publicité reçue, liste de lecture ou playlist...) à partir du système d'information auquel il est connecté ou d'une autre source. Lorsqu'il reçoit la trame de type DATA en provenance du module serveur, le proxy détecte le flag « SPOC » et extrait le champ « SPOC » ci-avant du flux 23. Il dispose alors d'un nombre déterminé de trames de données (par exemple 4) pour transmettre une information destinée au module client MC (par exemple une liste de lecture).

### 5.2.2. Traitement d'Insertion d'informations de performance du réseau par le proxy

Dans ce deuxième mode de réalisation, le contenu des flux de données entre un module client (ici un terminal) et un module serveur (ici un serveur de contenus Akamai) est chiffré et transmis sous la forme d'un flux de données dans une connexion HTTP2. C'est ici le module serveur qui initie le traitement, en transmettant une requête d'intermédiation, en clair, au proxy pour que ce dernier insère des informations de performance (QoS, delay) dans un flux créé ensuite entre le module client et le module serveur, sans que le proxy n'ait besoin de connaître la nature ou le type du contenu chiffré.

Le proxy et le module serveur sont connectés en HTTP2, les données échangées étant chiffrées de bout en bout, le module client et le module serveur détectant l'éventuelle non-intégrité de ces échanges. Le contenu des trames de contrôle de type « HEADERS » n'est par contre pas chiffré.

Le proxy est interfacé avec le système de surveillance des réseaux d'accès fixe et mobile de l'opérateur du réseau de communication.

Le module serveur transmet au proxy une requête d'intermédiation désignant une opération d'intermédiation à effectuer correspondant à une délégation d'insertion d'informations, afin que le proxy lui communique, pour chaque nouvelle requête vers un contenu (par exemple d'une chaîne de télévision) émise par le module client MC, le délai de transmission du réseau d'accès (en millisecondes). Le champ « SPOC » inséré dans la trame de données implémentant cette requête d'intermédiation peut prendre la forme suivante :

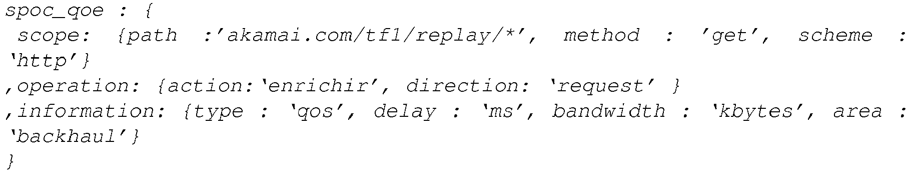

La délégation d'insertion porte sur des requêtes à venir vers un ensemble d'URL.

Le proxy reçoit cette requête de délégation d'insertion et peut extraire le champ SPOC de la trame de données, afin que ce champ ne soit pas communiqué à un user-agent (car sinon cela pourrait engendrer des erreurs au niveau de cet user-agent). Le proxy stocke et active cette délégation d'insertion pour toutes les requêtes vers 'akamai.com/tf1/replay/*' effectuées par les user-agents connectés au proxy.

Lorsqu'un un user-agent d'un module client requiert ensuite l'accès à 'akamai.com/tf1/replay/*', sa pile HTTP2 transmet une trame « HEADERS » pour créer un flux #45 de trames de données (valeur choisie arbitrairement). À la réception d'une trame « HEADERS » vers une URL appartenant à l'ensemble identifié précédemment (le proxy examinant les champs « HEADERS »), ce qui est le cas de cette trame créant le flux #45, le proxy y ajoute un flag « SPOC » et transmet la trame « HEADERS » ainsi modifiée au module serveur. Ensuite il interroge le système de surveillance et obtient la performance du réseau d'accès pour cet user-agent particulier. Le proxy insère dans une trame de données du flux #45 un champ « SPOC » contenant les informations relatives à la performance du réseau d'accès de cet user-agent, par exemple sous la forme suivante :

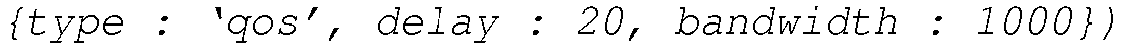

Le module serveur reçoit la trame HTTP2 HEADERS ayant le flag SPOC. Il identifie les niveaux d'encodage disponibles pour le contenu demandé en attendant les informations de performances. Il reçoit ensuite la trame DATA contenant le message SPOC (et donc les performances du réseau), ce qui lui permet de fournir le contenu souhaité avec le niveau d'encodage adapté à la performance indiquée.

Deux implémentations peuvent être envisagées :

### Implémentation 1:

Dans cette première implémentation, le proxy dispose des moyens pour décompresser et analyser tous les HEADERS reçus. Il tient à jour les tables de HEADERS comme prévu par la spécification HTTP2. Il a donc connaissance des champs des entêtes échangés.

Le module serveur transmet une délégation d'insertion au proxy sur le flux #0 dans une trame « HEADERS » ayant le flag « SPOC ». Le proxy active alors la délégation : il ajoute le flag SPOC à une trame « HEADERS » et la transmet au module serveur. Le proxy interroge le système de surveillance du réseau et insère dans le flux #45 une trame HTTP2 de type « DATA » ayant le flag SPOC et contenant les informations relatives à la performance du réseau d'accès de cet user-agent (par exemple *information: {type : 'qos', delay : 20, bandwidth : 1000}*)*,* cette insertion étant faite dans le champ SPOC de délégation d'une première trame de type « DATA » émise par le module serveur dans le flux #45.

### Implémentation 2:

Dans cette autre implémentation, le proxy ne dispose pas des moyens pour décompresser et analyser tous les HEADERS. Il n'a donc pas connaissance des champs des entêtes échangés.

Dans ce cas, le module serveur reçoit la trame HTTP2 HEADERS créant le flux 45 et demandant par exemple un accès à une ressource *(« akamai.com*/*tf1*/*replay*/*lost*/*season5*/*episode34* »). Le module serveur transmet alors un champ SPOC de délégation dans un premier message de type DATA du flux 45 dans lequel il a pris soin d'insérer un flag SPOC. Le champ SPOC peut prendre la forme suivante :

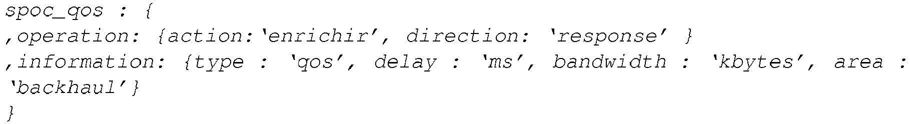

En attendant l'arrivée d'information de QoS, le module serveur prépare son traitement.

Le proxy reçoit et extrait de la trame DATA du flux 45 le champ SPOC de délégation en provenance du serveur. Le proxy interroge le système de surveillance du réseau et insère dans le flux 45 allant vers le serveur une trame HTTP2 de type DATA ayant le flag SPOC et contenant les informations relatives à la performance du réseau d'accès de ce user-agent (exemple *information: {type : 'qos', delay : 20, bandwidth : 1000}*).

Le module serveur reçoit ces informations d'intermédiation et fournit le contenu dans des trames DATA du flux #45 avec un niveau d'encodage adapté aux performances indiquées. Le proxy relaie ces trames DATA vers le module client.

### 5.2.3. Traitement de mise en cache de contenus

Dans ce troisième mode de réalisation, le contenu des flux de données entre un module client (par exemple un terminal) et un module serveur est chiffré et transmis sous la forme de flux individuels dans une connexion HTTP2.

C'est ici le proxy qui initie le procédé, en envoyant au module serveur un message requérant une délégation d'intermédiation, pour faire de la mise en cache de contenu. S'il est d'accord avec cette requête, le module serveur retourne une requête d'intermédiation, en clair, au proxy pour que ce dernier mémorise le contenu (soit auprès d'un module serveur FTP, soit à la volée, comme il sera vu plus loin), sans que le proxy n'ait besoin de connaître la nature ou le type du contenu caché (il sait juste que l'URL de ce contenu a une forte audience, et donc pourrait bénéficier d'une mise en cache au niveau du proxy).

Deux implémentations peuvent être envisagées :

### Implémentation 1:

Les flux de données échangées entre les dispositifs client et serveur sont chiffrés individuellement. Le contenu des messages HEADERS n'est pas chiffré. Le proxy dispose d'une mémoire cache à laquelle il a accès. Il mesure en tache de fond l'audience de chaque URL et détermine sur cette base s'il convient de stocker le contenu d'une URL (par exemple http://akamai.com/lost/episode34), par exemple lorsque le nombre de requête pour cette URL dépasse un seuil de popularité.

Un module client demande cette URL dans une trame « HEADERS » requérant la création d'un nouveau flux #56 (valeur choisie arbitrairement). Le proxy insère dans cette trame une requête de délégation d'intermédiation, pour la mise en cache de ce contenu, sous la forme du champ SPOC suivant :

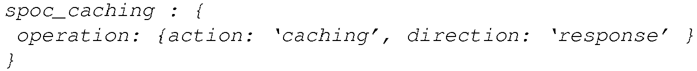

Le module serveur reçoit la trame de contrôle HTTP2 HEADERS créant le flux #56 ayant un flag SPOC. Il identifie le contenu demandé. Il reçoit ensuite sur le flux #56 une trame DATA contenant le champ SPOC ci-avant, lui demandant de déléguer une opération de « caching » au niveau du proxy.

S'il accepte cette requête, le module serveur transmet au proxy, dans une première trame de type DATA du flux #56, un champ SPOC détaillant le mode d'ingestion et de livraison (taille, chiffrement, ...) du contenu, comme indiqué ci-dessous :

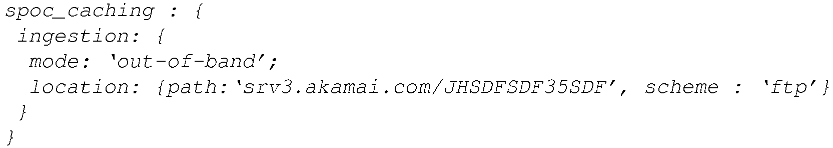

Le proxy extrait ce champ SPOC du flux 56. Il l'interprète, puis il télécharge le contenu auprès de l'adresse indiquée (en l'occurrence le serveur srv3.akamai.com/JHSDFSDF35SDF) en FTP, et le mémorise dans la mémoire cache.

Le proxy peut alors directement transmettre le contenu lorsqu'il reçoit une nouvelle requête vers l'URL http://akamai.com/lost/episode34, sans que le module serveur n'ait besoin de fournir à nouveau ce contenu et sans que le proxy ne connaisse la nature de ce contenu (il ne connaît que l'URL). Le téléchargement à partir d'un autre serveur (ici un serveur FTP) est une solution simple pour les contenus dont le stockage n'est pas transitif, ou dont la transmission est complexe à partir du module serveur MS.

### Implémentation 2:

Il s'agit d'une variante de l'implémentation 1 où le module serveur fournit le contenu dans le flux #56 et où le proxy stocke ce contenu au fur et à mesure de la transmission du contenu du module serveur vers le module client.

Dans ce cas, le module serveur transmet au proxy, dans une première trame de type DATA du flux #56, un champ SPOC détaillant le format du contenu et son mode d'ingestion et de livraison (taille, chiffrement, ...), comme indiqué ci-dessous :

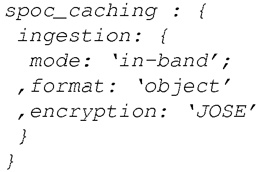

Le téléchargement au fil de l'eau est une solution simple pour les contenus qui peuvent être directement mis en cache.

Les deux champs SPOC ci-dessus ne contiennent pas d'informations décrivant le mode de livraison du contenu. Cependant, dans certains cas, le module serveur devra les fournir, par exemple si par choix le module serveur fournit un contenu encodé différemment (e.g. pour des raisons commerciales et contractuelles, le module serveur fournit une version SD au proxy, alors qu'il livre au module clients finaux une version HD), ou encore si le proxy est trop simple pour capturer le détail du mode de livraison utilisé. Il s'agit par exemple de la livraison en DASH demandant un « manifest file » dont le proxy n'a même pas connaissance. Dans ce cas, le champ suivant est ajouté :

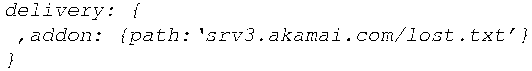

### 5.3. Autres aspects et avantages

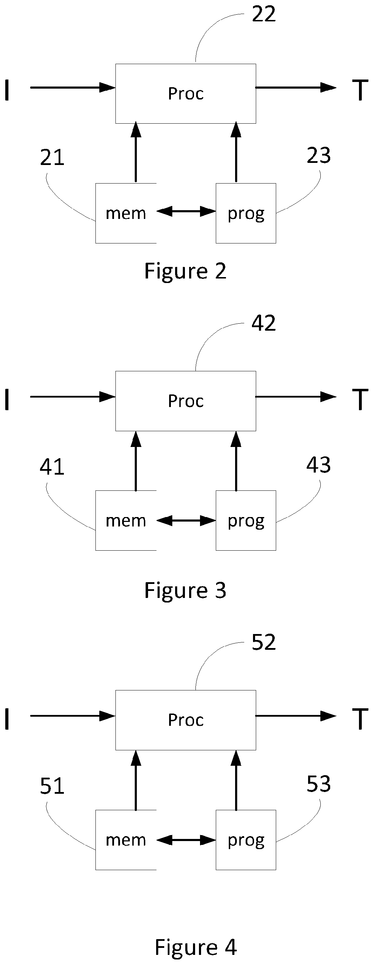

On décrit, en relation avec la **figure 2**, un module intermédiaire MI lorsqu'il est implémenté au sein d'un dispositif, dit dispositif intermédiaire, tel qu'un serveur proxy, selon un mode de réalisation de la présente invention.

Un tel dispositif intermédiaire comprend une mémoire 21, constituée par exemple d'une mémoire tampon, et une unité de traitement 22, équipée par exemple d'un microprocesseur.

Le module intermédiaire MI peut alors prendre la forme d'un programme d'ordinateur 23 mettant en œuvre le procédé de traitement tel que décrit précédemment. À l'initialisation, les instructions de code du programme d'ordinateur 23 sont par exemple chargées dans une mémoire du dispositif, avant d'être exécutées par l'unité de traitement 22. L'unité de traitement 22 reçoit en entrée au moins une donnée représentative d'une requête d'intermédiation RIM. L'unité de traitement 22 met alors en œuvre les étapes du procédé de traitement, selon les instructions du programme d'ordinateur 23, pour effectuer un traitement adapté en fonction du contenu de cette requête d'intermédiation RIM, et notamment d'un champ identifiant une opération à effectuer contenu dans cette requête.

Pour cela, le dispositif implémentant le module MI comprend, outre la mémoire 21, des moyens de communication (non représentés) tels qu'une interface de communication réseau, pouvant recevoir et transmettre des données sur des flux avec un module client MC et un module serveur MS.

Le module MI peut aussi comprendre des moyens d'obtention de données d'intermédiation DIM auprès de dispositifs connectés au dispositif intermédiaire par l'intermédiaire d'un réseau de communication. Ces moyens peuvent se présenter sous la forme d'un processeur particulier implémenté au sein du dispositif, le processeur étant un processeur sécurisé ou redondant. Selon un mode de réalisation particulier, ce dispositif met en œuvre une application particulière qui est en charge du traitement des données.

On décrit maintenant, en relation avec la **figure 3**, un module client MC selon un mode de réalisation de la présente invention, dans lequel ce module MC est implémenté au sein d'un dispositif, dit dispositif client, tel qu'un terminal. Il peut s'agir notamment du cas d'une application cliente installée sur un terminal mobile.

Un tel dispositif client comprend notamment une mémoire 41, constituée par exemple d'une mémoire tampon, et une unité de traitement 42, équipée par exemple d'un microprocesseur.

Le module client MC peut alors prendre la forme d'un programme d'ordinateur 43 mettant en œuvre la préparation de la requête d'intermédiation RIM, destinée au module intermédiaire MI, ainsi que du message DEL permettant son identification au sein d'un flux de données chiffrées. À l'initialisation, les instructions de code du programme d'ordinateur 43 sont par exemple chargées dans une mémoire du dispositif client, avant d'être exécutées ensuite par l'unité de traitement 42.

Pour préparer le message DEL, l'unité de traitement 42 insère, dans une trame d'un flux de contrôle non chiffré à destination d'un module serveur MS, un indicateur (flag) permettant d'identifier la présence d'une requête d'intermédiation RIM dans un flux de données chiffrées destinées à ce module serveur MS, ainsi qu'un identifiant de ce flux de données. Pour préparer la requête d'intermédiation RIM, l'unité de traitement 42 insère, dans une partie non chiffrée d'une trame de données transportant des données chiffrées à destination du module serveur MS, un champ identifiant une opération d'intermédiation.

Le dispositif client comprend outre un module de communication (non représenté), tel une interface de communication permettant d'échanger des données avec le module serveur MS, via le module intermédiaire MI, sur un réseau de communication. Ce module de communication reçoit le message DEL et la requête d'intermédiation RIM préparés par l'unité de traitement 42, pour les transmettre vers le module intermédiaire MI.

On décrit maintenant, en relation avec la **figure 4**, un module serveur MS selon un mode de réalisation de la présente invention, dans lequel ce module MS est implémenté au sein d'un dispositif, dit dispositif serveur, tel qu'un serveur fournissant des contenus ou des services. Il peut s'agir notamment du cas d'une application serveur installée sur un équipement d'un fournisseur de services.

Un tel dispositif serveur comprend notamment une mémoire 51, constituée par exemple d'une mémoire tampon, et une unité de traitement 52, équipée par exemple d'un microprocesseur. Le module serveur MS peut alors prendre la forme d'un programme d'ordinateur 53 mettant en œuvre la préparation de la requête d'intermédiation RIM, destinée au module intermédiaire MI, ainsi que du message DEL permettant son identification au sein d'un flux de données chiffrées. À l'initialisation, les instructions de code du programme d'ordinateur 53 sont par exemple chargées dans une mémoire du dispositif serveur, avant d'être exécutées ensuite par l'unité de traitement 52.

Pour préparer le message DEL, l'unité de traitement 52 insère, dans une trame d'un flux de contrôle non chiffré à destination d'un module client MC, un indicateur (flag) permettant d'identifier la présence d'une requête d'intermédiation RIM dans un flux de données chiffrées destinées à ce module client MC, ainsi qu'un identifiant de ce flux de données. Pour préparer cette requête d'intermédiation RIM, l'unité de traitement 52 insère, dans une partie non chiffrée d'une trame de données transportant des données chiffrées à destination du module client MC, un champ identifiant une opération d'intermédiation.

Le dispositif serveur comprend outre un module de communication (non représenté), agissant comme une interface de communication permettant d'échanger des données avec le module client MC, via le module intermédiaire MI, sur un réseau de communication. Ce module de communication reçoit le message DEL et la requête d'intermédiation RIM préparés par l'unité de traitement 52, pour les transmettre vers le module intermédiaire MI.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, les modules clients, intermédiaires et serveur ont été décrits précédemment sous la forme de dispositifs distincts. Il est cependant possible que certains de ces modules soient installés sur un même dispositif. Cela peut être notamment le cas lorsque le module client est un navigateur internet installé sur un terminal (mobile par exemple) et le module intermédiaire est un « plugin » ou un « add-on » de ce navigateur, installé sur ce même terminal. C'est aussi le cas lorsque le module client est une application cliente installée sur terminal (mobile par exemple) et le module intermédiaire est un « SDK » de cette application, installé sur ce même terminal.

## Revendications

1. Procédé de traitement de données, mis en œuvre au sein d'un module intermédiaire (MI) entre un module client (MC) et un module serveur (MS) connectés au travers d'un réseau de communication, comprenant:
- une étape de réception (10) d'un message (DEL) identifiant une trame de données d'un flux de données chiffrées échangées entre le module client (MC) et le module serveur (MS), dans laquelle est inséré un champ identifiant une opération d'intermédiation à effectuer relativement audit flux de données chiffrées ;
- postérieurement à la réception dudit message (DEL), une étape de réception (20), en provenance d'un des modules client et serveur, de ladite trame de donnée, définissant une requête d'intermédiation (RIM) identifiant ladite opération d'intermédiation à effectuer relativement audit flux de données chiffrées échangées entre le module client (MC) et le module serveur (MS), ladite trame de données présentant une première partie où sont transportées les données chiffrées et une deuxième partie, lisible par le module intermédiaire, dans laquelle est inséré ledit champ identifiant l'opération d'intermédiation à effectuer ;
- une étape de traitement (30) relatif auxdites données chiffrées en fonction de ladite opération d'intermédiation.

2. Procédé de traitement selon la revendication 1 mis en œuvre à l'aide d'un protocole de transmission de données définissant, outre le flux de données au sein duquel sont transmises les données chiffrées, un flux de contrôle, lisible par le module intermédiaire, au sein duquel est transmis le message (DEL).

3. Procédé de traitement selon la revendication 2, dans lequel le protocole de transmission est le protocole HTTP en version 2.

4. Procédé de traitement de données selon l'une des revendications 1 à 3, dans lequel la réception (20) de la requête d'intermédiation fait suite à la transmission, par le module intermédiaire au module client ou au module serveur, d'un message requérant une délégation d'intermédiation.

5. Procédé de traitement de données selon l'une des revendications 1 à 4, dans lequel l'opération d'intermédiation à effectuer est un enrichissement du flux de données, le procédé étant **caractérisé en ce qu'**il comprend en outre une étape d'obtention (25) d'au moins une donnée d'intermédiation (DIM) et **en ce que** l'étape de traitement (30) comprenant la transmission (31,32) à un des modules client ou serveur (MC, MS) de ladite donnée d'intermédiation dans le flux de données chiffrées.

6. Procédé de traitement selon l'une des revendications 1 à 4, dans lequel l'opération d'intermédiation à effectuer est le stockage d'un contenu associé aux données chiffrées, le procédé étant **caractérisé en outre en ce que** l'étape de traitement (30) comprend la mémorisation (33) d'un contenu identifié par ladite requête d'intermédiation (RIM).

7. Procédé de traitement selon l'une des revendications 1 à 4, dans lequel l'opération d'intermédiation à effectuer est la lecture de données transmises dans le flux de données chiffrées, le procédé étant **caractérisé en outre en ce que** l'étape de traitement (30) comprend l'extraction par le module intermédiaire de données lisibles accompagnant les données chiffrées au sein d'une trame du flux transportant les données chiffrées et la transmission desdites données lisibles à un équipement du réseau les utilisant dans un traitement propre au réseau.

8. Procédé de traitement selon l'une des revendications 1 à 4, dans lequel l'opération d'intermédiation à effectuer est la modification de données transmises dans le flux de données chiffrées, le procédé étant **caractérisé en outre en ce que** l'étape de traitement (30) comprend la modification (35) par le module intermédiaire de données lisibles accompagnant les données chiffrées au sein d'une trame du flux transportant les données chiffrées.

9. Module intermédiaire (MI) de traitement de données, configuré pour être utilisé entre un module client (MC) et un module serveur (MS) connectés au travers d'un réseau de communication, comprenant:
- des moyens de réception d'un message (DEL) identifiant une trame de données d'un flux de données chiffrées échangées entre le module client (MC) et le module serveur (MS), dans laquelle est inséré un champ identifiant une opération d'intermédiation à effectuer relativement audit flux de données chiffrées ;
- des moyens de réception, en provenance d'un des modules client et serveur (MC,MS), de ladite trame de donnée, après réception dudit message (DEL), ladite trame de donnée définissant une requête d'intermédiation (RIM) identifiant ladite opération d'intermédiation à effectuer relativement audit flux de données chiffrées échangées entre le module client (MC) et le module serveur (MS), ladite trame de données présentant une première partie où sont transportées les données chiffrées et une deuxième partie, lisible par le module intermédiaire, dans laquelle est inséré ledit champ identifiant l'opération d'intermédiation à effectuer ;
- des moyens de traitement (22) associé audit flux de données chiffrées en fonction de ladite opération d'intermédiation.

10. Module (MC,MS), dit module source, comprenant des moyens de communication à un réseau de communication, pour la transmission de données chiffrées à destination d'un autre module (MS,MC), dit module destinataire, via un module intermédiaire (MI) situé dans le réseau de communication, comprenant en outre des moyens de traitement (41,51) configurés pour générer :
- un message (DEL) identifiant une trame de données d'un flux de données chiffrées échangées avec ledit module destinataire, dans laquelle est inséré un champ identifiant une opération d'intermédiation à effectuer, les moyens de communications étant configurés pour transmettre (10,10') ledit message (DEL) au module intermédiaire (MI) ;
- ladite trame de données, définissant une requête d'intermédiation (RIM) identifiant ladite opération d'intermédiation à effectuer relativement audit flux de données chiffrées échangées avec ledit module destinataire, ladite trame de données présentant une première partie où sont transportées les données chiffrées et une deuxième partie, lisible par le module intermédiaire, dans laquelle est inséré ledit champ identifiant l'opération d'intermédiation à effectuer, les moyens de communications étant configurés en outre pour transmettre (20,20') ladite requête d'intermédiation (RIM) au module intermédiaire (MI), après transmission dudit message (DEL).

11. Produit programme d'ordinateur téléchargeable depuis un réseau de communication et/ou stocké sur un support lisible par un ordinateur et/ou un processeur, **caractérisé en ce qu'**il comprend des instructions de code de programme pour l'exécution d'un procédé de traitement selon la revendication 1, lorsqu'il est exécuté sur un ordinateur et/ou un processeur.

## Patentansprüche

1. Datenverarbeitungsverfahren, das in einem Vermittlermodul (MI) zwischen einem Client-Modul (MC) und einem Server-Modul (MS) ausgeführt wird, die über ein Kommunikationsnetzwerk verbunden sind, umfassend:
- einen Empfangsschritt (10) zum Empfangen einer Nachricht (DEL), die einen Datenframe eines Stroms verschlüsselter Daten, die zwischen dem Client-Modul (MC) und dem Server-Modul (MS) ausgetauscht werden, identifiziert, in den ein Feld eingefügt ist, das eine Vermittlungsoperation identifiziert, die bezüglich des Stroms verschlüsselter Daten durchzuführen ist;
- nach dem Empfangen der Nachricht (DEL) einen Empfangsschritt (20) zum Empfangen, von einem der Client- und Server-Module, des Datenframes, der eine Vermittlungsanforderung (RIM) definiert, welche die Vermittlungsoperation identifiziert, die bezüglich des Stroms verschlüsselter Daten, die zwischen dem Client-Modul (MC) und dem Server-Modul (MS) ausgetauscht werden, durchzuführen ist, wobei der Datenframe einen ersten Teil aufweist, in dem die verschlüsselten Daten transportiert werden, und einen für das Vermittlermodul lesbaren zweiten Teil, in den das Feld eingefügt ist, das die durchzuführende Vermittlungsoperation identifiziert;
- einen Verarbeitungsschritt (30) bezüglich der verschlüsselten Daten in Abhängigkeit von der Vermittlungsoperation.

2. Verarbeitungsverfahren nach Anspruch 1, das mithilfe eines Datenübertragungsprotokolls ausgeführt wird, das neben dem Datenstrom, in dem die verschlüsselten Daten übertragen werden, einen für das Vermittlermodul lesbaren Steuerstrom definiert, in dem die Nachricht (DEL) übertragen wird.

3. Verarbeitungsverfahren nach Anspruch 2, bei dem das Übertragungsprotokoll das Protokoll HTTP in der Version 2 ist.

4. Datenverarbeitungsverfahren nach einem der Ansprüche 1 bis 3, bei dem das Empfangen (20) der Vermittlungsanforderung auf die Übertragung, durch das Vermittlermodul an das Client-Modul oder an das Server-Modul, einer Nachricht folgt, die eine Vermittlungsdelegierung anfordert.

5. Datenverarbeitungsverfahren nach einem der Ansprüche 1 bis 4, bei dem die durchzuführende Vermittlungsoperation eine Anreicherung des Datenstroms ist, wobei das Verfahren **dadurch gekennzeichnet ist, dass** es ferner einen Schritt des Erhaltens (25) mindestens eines Vermittlungsdatenelements (DIM) umfasst und dass der Verarbeitungsschritt (30) das Übertragen (31, 32) des Vermittlungsdatenelements in dem Strom verschlüsselter Daten an eines der Client-oder Server-Module (MC, MS) umfasst.

6. Verarbeitungsverfahren nach einem der Ansprüche 1 bis 4, bei dem die durchzuführende Vermittlungsoperation die Speicherung eines den verschlüsselten Daten zugeordneten Inhalts ist, wobei das Verfahren ferner **dadurch gekennzeichnet ist, dass** der Verarbeitungsschritt (30) das Speichern (33) eines durch die Vermittlungsanforderung (RIM) identifizierten Inhalts umfasst.

7. Verarbeitungsverfahren nach einem der Ansprüche 1 bis 4, bei dem die durchzuführende Vermittlungsoperation das Lesen von Daten ist, die im Strom verschlüsselter Daten übertragen werden, wobei das Verfahren ferner **dadurch gekennzeichnet ist, dass** der Verarbeitungsschritt (30) das Extrahieren von lesbaren Daten, welche die verschlüsselten Daten in einem Frame des die verschlüsselten Daten transportierenden Stroms begleiten, durch das Vermittlungsmodul und das Übertragen der lesbaren Daten an eine Einrichtung des Netzwerks, das sie bei einer netzspezifischen Verarbeitung verwendet, umfasst.

8. Verarbeitungsverfahren nach einem der Ansprüche 1 bis 4, bei dem die durchzuführende Vermittlungsoperation das Ändern von im Strom verschlüsselter Daten übertragenen Daten ist, wobei das Verfahren ferner **dadurch gekennzeichnet ist, dass** der Verarbeitungsschritt (30) das Ändern (35) von lesbaren Daten, welche die verschlüsselten Daten in einem Rame des die verschlüsselten Daten transportierenden Stroms begleiten, durch das Vermittlermodul umfasst.

9. Vermittlermodul (MI) zur Verarbeitung von Daten, das dazu ausgestaltet ist, zwischen einem Client-Modul (MC) und einem Server-Modul (MS) verwendet zu werden, die über ein Kommunikationsnetzwerk verbunden sind, umfassend:
- Mittel zum Empfangen einer Nachricht (DEL), die einen Datenframe eines Stroms verschlüsselter Daten, die zwischen dem Client-Modul (MC) und dem Server-Modul (MS) ausgetauscht werden, identifiziert, in den ein Feld eingefügt ist, das eine Vermittlungsoperation identifiziert, die bezüglich des Stroms verschlüsselter Daten durchzuführen ist;
- Mittel zum Empfangen, von einem der Client- und Server-Module (MC, MS), des Datenframes nach dem Empfangen der Nachricht (DEL), wobei der Datenframe eine Vermittlungsanforderung (RIM) definiert, welche die Vermittlungsoperation identifiziert, die bezüglich des Stroms verschlüsselter Daten, die zwischen dem Client-Modul (MC) und dem Server-Modul (MS) ausgetauscht werden. durchzuführen ist, wobei der Datenframe einen ersten Teil aufweist, in dem die verschlüsselten Daten transportiert werden, und einen für das Vermittlermodul lesbaren zweiten Teil, in den das Feld eingefügt ist, das die durchzuführende Vermittlungsoperation identifiziert;
- Verarbeitungsmittel (22) für die Verarbeitung, die dem Strom verschlüsselter Daten in Abhängigkeit von der Vermittlungsoperation zugeordnet ist.

10. Modul (MC, MS), Quellmodul genannt, umfassend Mittel zur Kommunikation mit einem Kommunikationsnetzwerk, zur Übertragung von verschlüsselten Daten an ein anderes Modul (MS, MC), Empfängermodul genannt, über ein Vermittlermodul (MI), das in dem Kommunikationsnetzwerk gelegen ist, umfassend ferner Verarbeitungsmittel (41, 51), die dazu ausgestaltet sind zu erzeugen:
- eine Nachricht (DEL), die einen Datenframe eines Stroms verschlüsselter Daten, die mit dem Empfängermodul ausgetauscht werden, identifiziert, in den ein Feld eingefügt ist, das eine durchzuführende Vermittlungsoperation identifiziert, wobei die Kommunikationsmittel dazu ausgestaltet sind, die Nachricht (DEL) an das Vermittlermodul (MI) zu übertragen (10, 10');
- wobei der Datenframe eine Vermittlungsanforderung (RIM) definiert, welche die durchzuführende Vermittlungsoperation bezüglich des Stroms verschlüsselter Daten, die mit dem Empfängermodul ausgetauscht werden, identifiziert, wobei der Datenframe einen ersten Teil aufweist, in dem die verschlüsselten Daten transportiert werden, und einen für das Vermittlermodul lesbaren zweiten Teil, in den das Feld eingefügt ist, das die durchzuführende Vermittlungsoperation identifiziert, wobei die Kommunikationsmittel ferner dazu ausgestaltet sind, die Vermittlungsanforderung (RIM) nach dem Übertragen der Nachricht (DEL) an das Vermittlermodul (MI) zu übertragen (20, 20').

11. Computerprogrammprodukt, das von einem Kommunikationsnetzwerk heruntergeladen werden kann und/oder auf einem für einen Computer und/oder einen Prozessor lesbaren Medium gespeichert ist, **dadurch gekennzeichnet, dass** es Programmcodeanweisungen umfasst, die bei seiner Ausführung auf einem Computer und/oder einem Prozessor das Verarbeitungsverfahren nach Anspruch 1 ausführen.

## Claims

1. Method for processing data, implemented within an intermediary module (MI) between a client module (MC) and a server module (MS) that are connected through a communication network, comprising:
- a step of receiving (10) a message (DEL) identifying a data frame of a stream of encrypted data exchanged between the client module (MC) and the server module (MS), into which a field identifying an operation of intermediation to be performed relative to said stream of encrypted data is inserted;
- after receiving said message (DEL), a step of receiving (20), from one among the client module and server module, said data frame, defining an intermediation request (RIM) identifying said operation of intermediation to be performed relative to said stream of encrypted data exchanged between the client module (MC) and the server module (MS), said data frame having a first part in which the pieces of encrypted data are transported and a second part, readable by the intermediary module, into which said field identifying the operation of intermediation to be performed is inserted;
- a step of processing (30) relative to said encrypted data as a function of said operation of intermediation.

2. Method for processing according to Claim 1, implemented using a data transmission protocol defining, in addition to the data stream within which the pieces of encrypted data are transmitted, a control stream, readable by the intermediary module, within which the message (DEL) is transmitted.

3. Method for processing according to Claim 2, wherein the transmission protocol is the HTTP version 2 protocol.

4. Method for processing data according to one of Claims 1 to 3, wherein the receiving (20) of the intermediation request follows the transmission, by the intermediary module, to the client module or to the server module, of a message requesting a delegation of intermediation.

5. Method for processing data according to one of Claims 1 to 4, wherein the operation of intermediation to be performed is an enrichment of the data stream, the method being **characterized in that** it further comprises an act of obtaining (25) at least one piece of intermediation data (DIM) and **in that** the step of processing (30) comprises transmitting (31, 32), to one among the client module and server module (MC, MS), said piece of intermediation data in the stream of encrypted data.

6. Method of processing according to one of Claims 1 to 4, wherein the operation of intermediation to be performed is that of storing a content associated with the encrypted data, the method being further **characterized in that** the step of processing (30) comprises storing (33) a content identified by said intermediation request (RIM).

7. Method of processing according to one of Claims 1 to 4, wherein the operation of intermediation to be performed is that of reading data transmitted in the stream of encrypted data, the method being further **characterized in that** the step of processing (30) comprises extracting, by the intermediary module, readable data accompanying the encrypted data within a frame of the stream conveying the encrypted data and transmitting said readable data to an equipment of the network using said readable data in a processing operation proper to the network.

8. Method of processing according to one of Claims 1 to 4, wherein the operation of intermediation to be performed is that of modifying data transmitted in the stream of encrypted data, the method being further **characterized in that** the step of processing (30) comprises the modification (35), by the intermediary module, of readable data accompanying the encrypted data within a frame of the stream conveying the encrypted data.

9. Intermediary module (MI) for processing data, configured to be used between a client module (MC) and a server module (MS) that are connected through a transmission network, comprising:
- means for receiving a message (DEL) identifying a data frame of a stream of encrypted data exchanged between the client module (MC) and the server module (MS), into which a field identifying an operation of intermediation to be performed relative to said stream of encrypted data is inserted;
- means for receiving, from one among the client module and server module (MC, MS), said data frame, after receiving said message (DEL), said data frame defining an intermediation request (RIM) identifying said operation of intermediation to be performed relative to said stream of encrypted data exchanged between the client module (MC) and the server module (MS), said data frame having a first part in which the pieces of encrypted data are transported and a second part, readable by the intermediary module, into which a field identifying the operation of intermediation to be performed is inserted;
- means for processing (22) associated with said stream of encrypted data as a function of said operation of intermediation.

10. Module (MC, MS), called source module, comprising means for communicating with a communication network, for transmitting encrypted data to another module (MS, MC), called destination module, via an intermediary module (MI) situated in the communication network, further comprising means for processing (41, 51) configured to generate:
- a message (DEL) identifying a data frame of a stream of encrypted data exchanged with said destination module, into which a field identifying an intermediation operation to be performed is inserted, the means for communicating being configured to transmit (10, 10') said message (DEL) to the intermediary module (MI);
- said data frame, defining an intermediation request (RIM) identifying said operation of intermediation to be performed relative to said stream of encrypted data exchanged with the destination module, said data frame having a first part in which the pieces of encrypted data are transported and a second part, readable by the intermediary module, into which said field identifying the operation of intermediation to be performed is inserted, the means for communicating being further configured to transmit (20, 20') said intermediation request (RIM) to the intermediary module (MI), after transmitting said message (DEL).

11. Computer program product downloadable from a communication network and/or stored on a medium readable by a computer and/or a processor, **characterized in that** it comprises program code instructions for executing a method for processing according to Claim 1, when it is executed on a computer and/or a processor.
